# EUROPÄISCHE PATENTSCHRIFT

(11) **EP 3 894 725 B1**
(45) Veröffentlichungstag und Bekanntmachung des Hinweises auf die Patenterteilung: **21.05.2025**
(21) Anmeldenummer: 19786334.3
(22) Anmeldetag: 14.10.2019
(51) Int. Cl.: F16H 63/34, B60T 13/74

(54) **SPERRAKTOR, SOWIE PARKSPERRE MIT EINEM SOLCHEN SPERRAKTOR**
LOCK ACTUATOR, AND PARK LOCK COMPRISING SUCH A LOCK ACTUATOR
ACTIONNEUR DE VERROUILLAGE AINSI QUE FREIN DE STATIONNEMENT ÉQUIPÉ D'UN TEL ACTIONNEUR DE VERROUILLAGE

(30) Priorität: 13.12.2018 DE 102018132182; 21.02.2019 EP 19158621
(43) Veröffentlichungstag der Anmeldung: 20.10.2021
(73) Patentinhaber: Solero Technologies Villingen GmbH, 78048 Villingen-Schwenningen (DE)
(72) Erfinder: SCHULZ, Florian, 78086 Brigachtal (DE); KAMMERER, Andreas, 78052 Obereschach (DE); REVIN, Mikhail, 78050 Villingen-Schwenningen (DE); HERMANN, Rolf, 78126 Königsfeld (DE)
(74) Vertreter: Westphal, Mussgnug & Partner Patentanwälte mbB
(86) Internationale Anmeldenummer: PCT/EP2019/077826
(87) Internationale Veröffentlichungsnummer: WO 2020/119980

(56) Entgegenhaltungen:
- CN-U- 204 041 981
- CN-U- 204 041 981
- DE-A1- 102006 039 862
- DE-A1- 102006 039 862
- DE-A1- 102012 021 221
- DE-A1- 102012 021 221
- KR-A- 20140 126 112
- KR-B1- 100 989 042
- US-A- 4 789 366
- US-A- 4 789 366
- US-A1- 2015 159 752
- US-A1- 2015 159 752

## Beschreibung

Die vorliegende Erfindung betrifft einen Sperraktor mit den Merkmalen des Patentanspruchs 1 sowie eine Parksperre mit einem solchen Sperraktor zum Feststellen eines Getriebes, insbesondere zum Feststellen eines automatischen Getriebes eines Kraftfahrzeugs mit den Merkmalen des Patentanspruchs sowie ein Kraftfahrzeug mit einer Parksperre mit den Merkmalen des Patentanspruchs 10.

Parksperren sind aus dem Stand der Technik in unterschiedlichen Ausgestaltungen vorbekannt und dienen üblicherweise der Betätigung einer mechanisch wirkenden Sperreinrichtung, durch die das Getriebe eines Kraftfahrzeuges, insbesondere das automatische Getriebe eines Kraftfahrzeuges, blockiert werden kann. Hierzu kann die Parksperre in eine das Getriebe freigebende erste Position und eine das Getriebe sperrende zweite Position zugestellt werden, in der beispielsweise eine Sperrklinke oder ein Bolzen in ein Sperrrad des automatischen Getriebes greift und somit das automatische Getriebe in einer Parkposition mechanisch blockiert.

Zur Betätigung der Parksperre werden in dem Stand der Technik unterschiedliche elektro-hydraulische Parksperren vorgeschlagen, welche sich dadurch auszeichnen, dass die Parksperre einerseits, beispielsweise mittels eines Federspeichers, vorgespannt ist und die Parksperre mittels eines hydraulisch betätigten Zylinders bzw. Kolbens entsperrt werden kann, wobei eine Verriegelungseinrichtung vorgesehen ist, durch welche ein ungewolltes Betätigen der Parksperre verhindert ist. Die Verriegelungseinrichtung umfasst typischerweise eine Verriegelungskulisse, durch welche mindestens ein Sperrelement in eine den Zylinder sperrende oder den Zylinder freigegebene Position verschiebbar ist. Das mindestens eine Sperrelement greift dabei formschlüssig in eine Rastkulisse des Zylinders ein. Weiteren Stand der Technik bilden die Druckschriften US 2015 159752 A1, DE 10 2006 039862 A1, DE 10 2012 021 221 A1, US 4 789 366 A, CN 204 041 981 U und KR 100 989 042 B1, welche den nächsten Stand der Technik darstellt und einen Sperraktor mit vielen gemeinsamen Merkmalen des vorliegenden Sperraktors zeigt, jedoch eine komplett umgekehrte Kinematik aufweist - die Aktoranfangslage und Aktorendlage sowie die entsprechende erste und zweite Position des Zylinders in dieser Druckschrift sind kinematisch genau umgekehrt zum Sperraktor nach Anspruch 1.

Als nachteilig an dem Stand der Technik hat sich herausgestellt, dass die aus dem Stand der Technik bekannten Parksperren eine aufwändige Konstruktion aufweisen, und zur Betätigung einerseits einen hohen hydraulischen Druck und andererseits eine große Kraft zum mechanischen Lösen oder Schließen der Parksperre benötigen. Im Stand der Technik haben sich dabei unterschiedliche Verriegelungseinrichtungen bewährt, jedoch hat sich herausgestellt, dass zum Lösen der Verriegelungseinrichtung große Kräfte notwendig sind, da oftmals das mindestens eine Sperrelement mit der Verriegelungskulisse und der Rastkulisse verklemmt ist. Dadurch weisen die aus dem Stand der Technik bekannten Parksperren neben einem erheblichen Gewicht auch eine nicht zu vernachlässigende Baugröße auf.

Hier setzt die vorliegende Erfindung an.

Es ist daher die Aufgabe der vorliegenden Erfindung, einen verbesserten Sperraktor insbesondere für eine Parksperre, eine Parkbremse mit einem Sperraktor mit einer geringeren Baugröße und einem niedrigeren Gewicht vorzuschlagen, welcher besonders energieeffizient und zuverlässig das Sperren eines Zylinders einer Parksperre für ein Getriebe, insbesondere ein automatisches Getriebes eines Kraftfahrzeugs ermöglicht und das Einsparen von Kosten in dem Herstellungsprozess bei gleichzeitig einfachen und reproduzierbaren Prozessen ermöglicht. Insbesondere soll durch eine neuartige Ausgestaltung des Sperraktors dieser besonders leicht und energieeffizient ausgestaltet werden, um die benötigten Kräfte zum Sperren bzw. Entsperren des Zylinders zu reduzieren, wodurch kleinere und leichtere Sperraktoren verwendet werden können.

Diese Aufgaben werden durch einen Sperraktor mit den Merkmalen des Patentanspruchs 1, durch eine Parksperre mit den Merkmalen des Patentanspruchs 6 und durch ein Kraftfahrzeug mit den Merkmalen des Patentanspruchs 10 gelöst.

Weitere vorteilhafte Ausgestaltungen der Erfindung werden in den Unteransprüchen angegeben.

Es ist vorteilhaft, wenn das Stellelement in der Längsachse linear beweglich ist oder wenn das Stellelement um die Längsachse drehbeweglich ist. Das Stellelement kann beispielsweise ein entlang der Längsachse linear beweglicher und betätigbarer Stößel sein oder eine um die Längsachse drehbewegliche und betätigbare Hülse. Bevorzugt ist das Stellelement ein Stößel, wodurch ein sehr kompakter Aufbau realisiert werden kann.

Darüber hinaus hat es sich als vorteilhaft erwiesen, wenn ein Aktorgehäuse vorgesehen ist, und wenn das Stellelement und/oder das mindestens eine Sperrelement in dem Aktorgehäuse gelagert sind, bzw. ist. Weiterhin ist es bevorzugt, wenn das Aktorgehäuse mit einem Gehäuseabschnitt bereichsweise entlang der Längsachse in einen Zylinder der Parksperre ragt, der Zylinder der Parksperre auf dem Gehäuseabschnitt lineargeführt ist.

Weiterhin hat es sich als vorteilhaft erwiesen, wenn das mindestens eine Sperrelement einer Rastkulisse ein Raststift ist.

Ein weiterer Aspekt der vorliegenden Erfindung betrifft eine Parksperre, insbesondere zur Verwendung in einem Kraftfahrzeug mit einem Automatikgetriebe, mit einem elektromagnetischen Sperraktor nach den Ansprüchen 1-5 und einem in der Längsachse beweglichen Zylinder bzw. Kolben, der eingerichtet ist, das Automatikgetriebe zu sperren, wobei der Zylinder eine Rastkulisse umfasst, in die das mindestens eine Sperrelement in der ersten Position oder der zweiten Position des Stellelementes eingreifen kann. In einer bevorzugten Ausgestaltung kann der Zylinder bzw. Kolben in einem Zylindergehäuse entlang der Längsachse geführt werden, wobei weiterhin bevorzugt das Zylindergehäuse aus einem Kunststoff hergestellt ist.

Der Sperraktor der Parksperre umfasst ein bewegliches und betätigbares Stellelement, das in eine erste Position und eine zweite Position beweglich ist und eine Verriegelungskulisse aufweist. Darüber hinaus umfasst der erfindungsgemäße Sperraktor mindestens ein Sperrelement, das relativ zu der Verriegelungskulisse verschiebbar gehalten ist, wobei die Verriegelungskulisse eine erste Fläche und eine zweite Fläche aufweist, die durch eine Keilfläche mit einer ersten Steigung verbunden sind und wobei die erste Fläche in der ersten Position und die zweite Fläche in der zweiten Position mit dem mindestens einen Sperrelement in Wirkkontakt sind. Das mindestens eine Sperrelement wird in Abhängigkeit von der Position des beweglichen Stellelements durch die Verriegelungskulisse zugestellt, wobei besonders bevorzugt das mindestens eine Sperrelement senkrecht zu der Längsachse durch die Verriegelungskulisse verschiebbar ist. Die erste Fläche und die zweite Fläche sind weiterhin bevorzugt in einem unterschiedlichen Abstand zu der Längsachse des Sperraktors ausgebildet, wodurch zwangsweise der Abstand zwischen der ersten Fläche und der zweiten Fläche einen Verstellweg des mindestens einen Sperrelementes vorgibt. Weiterhin kann weiterbildungsgemäß vorgesehen sein, dass die wenigstens eine erste Fläche und/oder die zweite Fläche zu der Keilfläche mit einer zweiten Steigung geneigt ist.

Das Zylindergehäuse bzw. Kolbengehäuse kann an einer Verbindungsstelle mit dem Aktorgehäuse mit einer Metall-Kunststoff-Verbindung verbunden sein, wobei die Metall-Kunststoff-Verbindung durch ein Anformen des Zylindergehäuses an das Aktorgehäuse gebildet werden kann oder durch eine Ultraschallverschweißung.

Eine Weiterbildung der Parksperre sieht vor, dass die Rastkulisse mindestens eine Aussparung aufweist, und dass die mindestens eine Aussparung von mindestens einer Fläche gebildet wird. Weiterhin kann die mindestens eine Fläche zwei Kontaktbereiche aufweisen, an denen das Sperrelement beim Eingreifen des Sperrelements in die Aussparung die Aussparung kontaktiert, wobei die zwei Kontaktbereiche beabstandet zu einer Linie angeordnet sind, die senkrecht von der Längsachse absteht, und die durch eine geometrische Mitte des Sperrelements verläuft. In den ausschließlich zwei Kontaktbereichen kontaktiert das Sperrelement idealisiert punktuell die Aussparung, und wird gegen die Aussparung gedrückt, wobei der Vektor der resultierenden Kraftvektoren in dem Kontaktbereich weder senkrecht zu der Längsachse, noch parallel zu der Längsachse zeigt, sondern in einem Winkel zwischen 5° und 85°, vorzugsweise 15° - 75°, weiter bevorzugt 30° - 60° und noch weiter bevorzugt 45° ± 5° zu der Längsachse angeordnet ist.

Eine Aussparung der Rastkulisse kann bogenförmig bzw. U-, V- oder trapezförmig sein und verhindert, dass bei dem Entsperren der Parksperre mittels des Sperraktors, dass das Sperrelement verkanntet oder verklemmt. Auch wird die zum Lösen der Verriegelungseinrichtung benötigte Kraft reduziert, wodurch ein geringerer Strom zum Entsperren benötigt wird.

Auch hat es sich als vorteilhaft erwiesen, wenn zwei Kontaktbereiche in der Längsachse (X-X) auf gegenüberliegenden Seiten des Punktes, bevorzugt symmetrisch, angeordnet sind. Für den Fall, dass das Sperrelement zumindest bereichsweise kreisrund bzw. kugelrund ausgebildet ist, ist eine Verbindungslinie zwischen den beiden Kontaktbereichen eine Sekante und der Abstand zwischen den beiden Kontaktbereichen ist kleiner als ein Durchmesser und beträgt mindestens 1/20 des Durchmessers.

Ein weiterer und letzter Aspekt der vorliegenden Erfindung betrifft ein Kraftfahrzeug mit einem Automatikgetriebe, welches mindestens eine erfindungsgemäße Parksperre mit einem erfindungsgemäßen elektromagnetischen raktor aufweist.

Nachfolgend wird unter Bezugnahme auf die begleitenden Zeichnungen ein erfindungsgemäßes Ausführungsbeispiel der vorliegenden Erfindung sowie eine Weiterbildung dessen im Detail erläutert. Es zeigen:
- Figur 1: eine schematische Schnittdarstellung einer Parksperre eines Kraftfahrzeugs mit einem erfindungsgemäßen Sperraktor, wobei ein Zylinder der Parksperre in einer ersten Position durch den Sperraktor festgestellt ist,
- Figur 2: eine schematische Schnittdarstellung einer Parksperre gemäß Figur 1, wobei der Zylinder der Parksperre in einer zweiten Position durch den Sperraktor festgestellt ist,
- Figur 3: eine vergrößerte Darstellung des erfindungsgemäßen Sperraktors gemäß Figur 1 oder 2 mit einem Stellelement und einer auf dem Stellelement angeordneten Verriegelungskulisse, welche eingerichtet ist, das mindestens eine Sperrelement zum Feststellen des Zylinders der Parksperre zu stellen,
- Figur 4: einer Weiterbildung der Parksperre gemäß den Figuren 1 bis 3, und

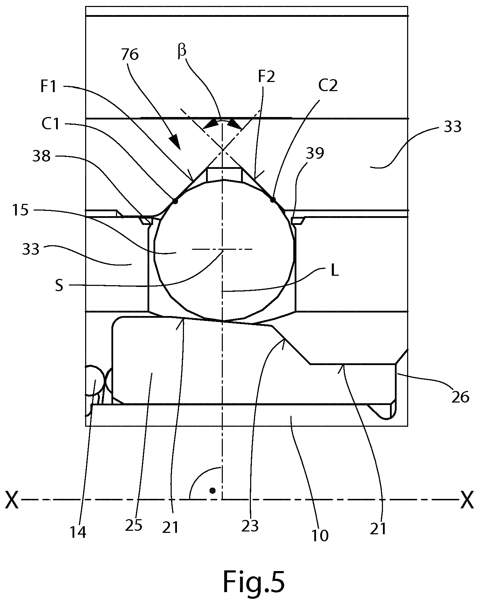

- Figur 5: eine vergrößerte Darstellung der Rastkulisse der Parksperre gemäß Figur 4.

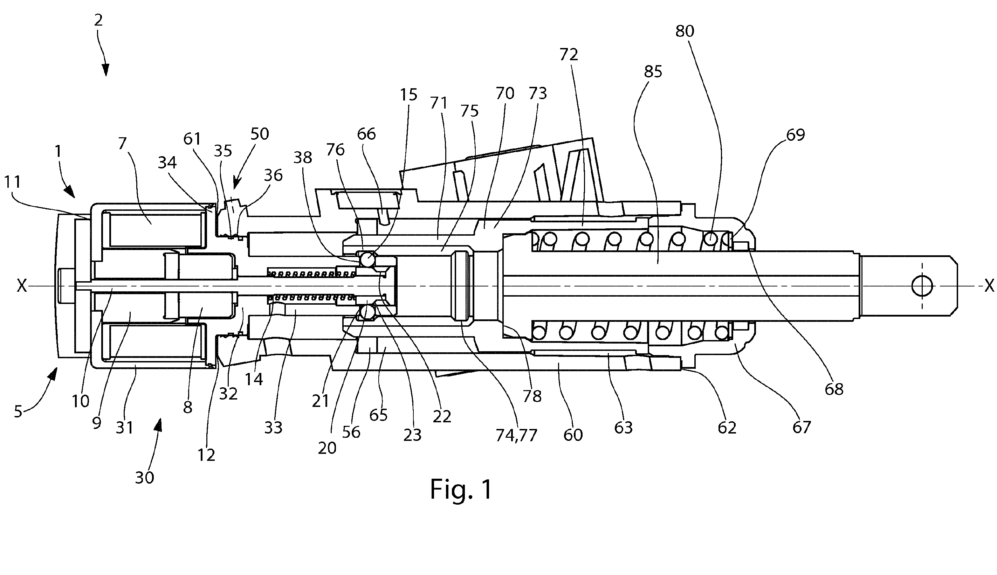

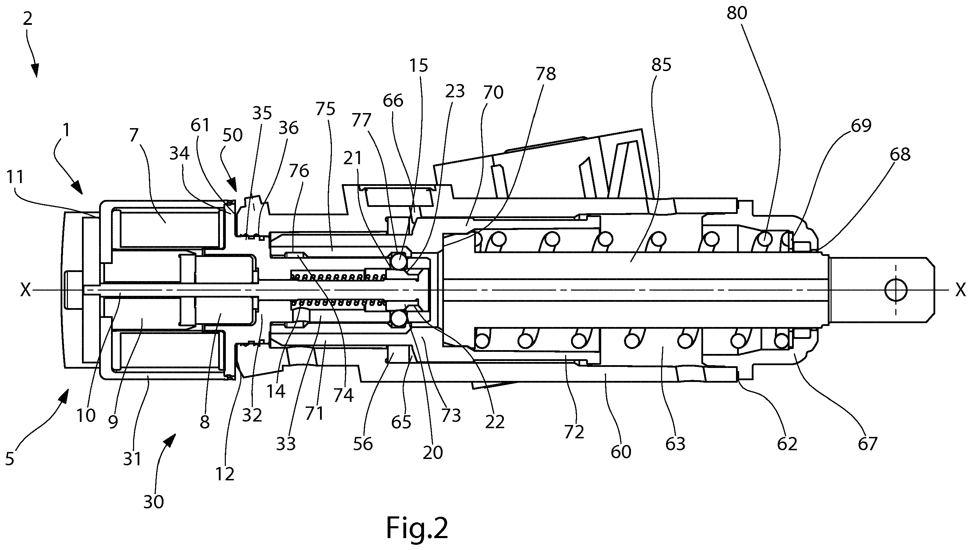

Figuren 1 und 2 zeigen eine erfindungsgemäße Parksperre 2 mit einem Sperraktor 1 und einem in einem Zylindergehäuse 60 angeordneten Zylinder 70 bzw. Kolben 70, der in dem Zylindergehäuse 60 in einer Längsachse X-X beweglich angeordnet ist.

Der Zylinder 70 der Parksperre 2 kann entlang einer Längsachse X-X zwischen einer ersten Position (siehe Figur 1) und einer zweiten Position (siehe Figur 2) verschoben werden, um ein nicht dargestelltes Getriebe, insbesondere ein automatisches Getriebe eines Kraftfahrzeugs, mechanisch zu sperren. Die erste Position des Zylinders 70 kann der das Getriebe sperrenden Stellung des Zylinders 70 entsprechen und die zweite Position B kann der das Getriebe freigegebenden Position des Zylinders 70 entsprechen oder umgekehrt.

Der Sperraktor 1 ist auf der Längsachse X-X angeordnet und weist eine erste Seite 11 und eine zweite Seite 12 auf, wobei die zweite Seite 12 die dem Zylinder 70 und dem Zylindergehäuse 60 zugewandte ist und die erste Seite 11 das freie Ende des Sperraktors 1 bildet.

Der Sperraktor 1 umfasst einen elektromagnetischen Aktor 5, eine bestrombare Spule 7, einen Anker 8, ein Stellelement 10, eine Verriegelungskulisse 20, eine Rückstellfeder 14, einen Poldeckel 9 und ein Aktorgehäuse 30.

Der elektromagnetische Aktor 5 ist nach Art eines Einfachhubmagnets ausgebildet, der durch eine elektromagnetische Kraftwirkung der bestromten Spule 7 eine lineare Bewegung des Ankers 8 und eines mit dem Anker 8 verbundenen Stellelementes 10 in der Längsachse X-X von einer Aktoranfangslage - welche in den Figuren 1 und 2 dargestellt ist - in eine Aktorendlage (nicht dargestellt) ausführt. Die Rückstellung erfolgt durch die Federkraft der Rückstellfeder 14. Die Aktoranfangslage entspricht einer ersten Position A des Stellelements 10 und die Aktorendlage einer zweiten Position B des Stellelementes.

Das Aktorgehäuse 30 des Sperraktors 1 umfasst einen ersten Gehäuseabschnitt 31 und einen zweiten Gehäuseabschnitt 32, wobei der erste Gehäuseabschnitt 31 die erste Seite 11, also das freie Ende des Sperraktors 1 verschließt und der zweite Gehäuseabschnitt 32 auf der dem Zylindergehäuse 60 zugewandten Seite des Sperraktors 1 angeordnet ist. Der erste Gehäuseabschnitt 31 und der zweite Gehäuseabschnitt 32 sind jeweils einstückig aus einem magnetischen und metallischen Werkstoff hergestellt und dienen der Führung des magnetischen Flusses, der aus einer Bestromung der Spule 7 resultiert.

Der zweite Gehäuseabschnitt 32 umfasst weiterhin einen Flansch 34, einen eine Zylindermantelfläche formenden Absatz 35 und eine von der zweiten Seite abstehende Gehäusehülse 33.

Das Stellelement 10 ist mit dem Anker 8 verbunden und ist einenends auf der ersten Seite 11 des elektromagnetischen Aktors 5 in einer Durchgangsbohrung in dem Poldeckel 9 gelagert und anderenends in dem zweiten Gehäuseabschnitt 32 bzw. in der an den zweiten Gehäuseabschnitt 32 angeformten Gehäusehülse 33 gelagert.

Bei einer Bestromung der Spule 7 wird der Anker 8 zusammen mit dem Stellelement 10 von der Hubanfangslage entlang der Längsachse X-X gegen die Kraft der Rückstellfeder 14 bewegt. Die Rückstellfeder 14 ist einenends in dem Aktorgehäuse 30 bzw. in der Gehäusehülse 33 des zweiten Gehäuseabschnitts 32 abgestützt und anderenends an einem auf der zweiten Seite angeordneten freien Ende, das mit einem Flansch versehen ist.

Der Anker 8 ist sowohl in der Aktoranfangslage als auch in der Aktorendlage in dem zweiten Gehäuseabschnitt 32 für einen Flussübergang gehalten, wobei in der Aktoranfangslage der Poldeckel 9 und der Anker 8 beabstandet sind. In der Aktorendlage wird der Luftspalt zwischen dem Anker 8 und dem Poldeckel 9 geschlossen, wobei auf der dem Anker 8 zugewandten Seite des Poldeckels 9 ein hülsenförmiger Abschnitt ausgebildet ist, der eingerichtet ist, den Anker 8 in der Aktorendlage zu umgreifen.

Es kann vorteilhaft sein, dass der hülsenförmige Abschnitt als Steuerkonus ausgebildet ist. Das freie Ende des hülsenförmigen Abschnitts kann annähernd in einer Ebene senkrecht zu der Längsachse X-X an dem dem Poldeckel 9 zugewandten Ende des Ankers 8 angeordnet sein. Weiterhin ist das freie Ende des hülsenförmigen Abschnitts beabstandet zu dem zweiten Gehäuseabschnitt 32 angeordnet.

Der Sperraktor 1 ist eingerichtet, den kolbenförmigen Zylinder 70 in der ersten Position festzulegen siehe Figur 1 - und in der zweiten Position - siehe Figur 2 - freizugeben. Hierzu sind das mindestens eine Sperrelement 15 und die Verriegelungskulisse 20 auf der dem Zylinder 70 zugewandten zweiten Seite 12 des Sperraktors 1 angeordnet. Zu diesem Zweck ist die Verriegelungskulisse 20 mit dem Stellelement 10 gekoppelt, wobei die Verriegelungskulisse eingerichtet ist, das mindestens eine Sperrelement 15 zum Festlegen oder Sperren des Zylinders 70 in der ersten Position oder der zweiten Position - wie nachfolgend noch im Detail erläutert wird - zuzustellen.

Das Zylindergehäuse 60 ist aus einem Kunststoff hergestellt und weist eine koaxial zu der Längsachse X-X ausgebildete Durchgangsöffnung 63 auf, die sich zwischen einer ersten Seite 61, welche dem elektromagnetischen Aktor 5 zugewandt ist, und einer zweiten Seite 62 erstreckt. In der Durchgangsöffnung 63 ist der Zylinder 70 in der Längsachse X-X beweglich angeordnet.

Das Zylindergehäuse 60 ist in einer Verbindungsstelle 50 mit dem Aktorgehäuse 30 fest verbunden, wobei das Zylindergehäuse 60 in dem dargestellten bevorzugten Ausführungsbeispiel über eine Zylindermantelfläche des Absatzes 35 auf den ersten Gehäuseabschnitt 31 aufgesteckt wird, bis die erste Seite 61 des Zylindergehäuses 60 an der Stirnfläche des Flansches 34 anliegt. Alternativ kann zwischen dem Zylindergehäuse 60 und der Stirnfläche des Flansches 34 ein Spalt ausgebildet sein, der dem Ausgleich von Toleranzen dienen kann.

Anschließend wird eine Metall-Kunststoff-Verbindung zwischen dem Aktorgehäuse 30 und dem Zylindergehäuse 60 hergestellt, wobei besonders bevorzugt die Metall-Kunststoff-Verbindung durch ein Ultraschallschweißverfahren erzeugt wird. Alternativ kann das Zylindergehäuse 60 direkt auf das Aktorgehäuse 30 in einem Umformverfahren, insbesondere Spritzgießen, aufgeformt werden.

Um der Metall-Kunststoff-Verbindung eine besonders gute Festigkeit zu verleihen, kann sowohl die Stirnseite des Flansches 34 als auch die Zylindermantelfläche des Absatzes 35 mit einer Oberflächenvergrößerung, beispielsweise einer Riffelung oder mindestens einer Hinterschneidung 36 versehen werden, wodurch insbesondere hohe Axialkräfte entlang der Längsachse X-X über die Metall-Kunststoff-Verbindung übertragen werden können.

Der Zylinder 70 ist einstückig aus im Wesentlichen zwei rohrförmigen Abschnitten ausgebildet und kann aus einem Kunststoff, vorzugsweise in einem Spritzgussverfahren, hergestellt werden. Der erste rohrförmige Abschnitt 71 und der zweite rohrförmige Abschnitt 72 sind in einem Übergangsbereich 73 miteinander verbunden.

Der erste Abschnitt 71 schließt zusammen mit dem Übergangsbereich 73 und dem Zylindergehäuse 60 einen Druckraum 65 ein, welcher mittels Dichtungen 56 flüssigkeits- und luftdicht verschlossen werden kann. Weiterhin greift der erste Abschnitt 71 in einen zwischen der Gehäusehülse 33 und dem Zylindergehäuse 60 eingeschlossenen hohlzylindrisch Hohlraum, so dass der erste Abschnitt 71 linear geführt auf der Gehäusehülse 33 einerseits und andererseits an dem Zylindergehäuse 60 geführt ist.

Das Zylindergehäuse 60 kann mindestens eine Steueröffnung 66 aufweisen, durch welche ein Medium in den Druckraum 65 eingebracht werden kann, um den Zylinder 70 entgegen der Federkraft einer Druckfeder 80 von der ersten Position in die zweite Position entlang der Längsachse X-X zu verschieben. Der Zylinder 70 ist somit ein einfach wirkender Zylinder.

Der Zylinder 70 ist im ersten rohrförmigen Abschnitt 71 auf der Gehäusehülse 33 geführt, wobei der erste rohrförmige Abschnitt 71 eine Gleitbuchse 75 aufweist, durch welche der Zylinder 70 auf der Gehäusehülse 33 linear gleitgelagert ist. Die Gleitbuchse 75 kann aus einem metallischen Werkstoff hergestellt sein und besonders bevorzugt ist der Zylinder 70 auf die Gleitbuchse 75 aufgespritzt, wodurch diese formschlüssig auf der inneren Mantelfläche des ersten rohrförmigen Abschnitts 71 des Zylinders 70 gehalten ist.

Die Gleitbuchse 75 umfasst eine erste Aussparung 76 und eine zweite Aussparung 77, welche in der Längsachse X-X zueinander beabstandet sind und eine Rastkulisse 74 bilden. Der Abstand zwischen der ersten Aussparung 76 und der zweiten Aussparung 77 entspricht dem Hub des Zylinders 70 zwischen der ersten Position gemäß Figur 1 und der zweiten Position gemäß Figur 2.

Auf der von dem ersten rohrförmigen Abschnitt 71 abgewandten Seite des Übergangsbereichs 73 ist innerhalb des zweiten rohrförmigen Abschnitts 72 ein Federschuh 78 ausgebildet. An dem Federschuh 78 ist ein Parksperrenstößel 85 abgestützt, wobei die Druckfeder 80 den Parksperrenstößel 85 gegen den Federschuh 78 in der Längsachse X-X gedrückt hält.

Die zweite Seite 62 des Zylindergehäuses 60 ist mittels eines Deckels 67 verschlossen, der eine Durchgangsöffnung 68 aufweist, durch die der Parksperrenstößel 85 zum Getriebe geführt werden kann. In der Durchgangsöffnung 38 kann ein Gleitelement angeordnet sein, das den Parksperrenstößel 85 lagert. Das Gleitelement kann aus einem beliebigen Werkstoff hergestellt sein, beispielsweise Metall oder PTFE und kann bevorzugt in eine entsprechende Ausnehmung in den Deckel 67 eingepresst, eingeklebt oder an dem Deckel 67 auf sonstige Weise befestig sein.

Die Druckfeder 80 kann mittels eines Federtellers 69 zwischen dem Parksperrenstößel bzw. dem Federschuh 78 und dem Federteller 69 bzw. dem Deckel 67 vorgespannt gehalten werden, so dass bei einer Druckbeaufschlagung des Druckraums 65 der Zylinder 70 in der Längsachse X-X entgegen der Federkraft der Druckfeder 80 aus der ersten Position A in die zweite Position B verschoben wird.

Der Sperraktor 1 legt den Zylinder 70 in der ersten Position fest, wobei der Sperraktor 1 den Zylinder 70 mittels der mit dem Stellelement 10 gekoppelten Verriegelungskulisse 20 und dem mindesten einen Sperrelement 15 festsetzten oder freigeben kann.

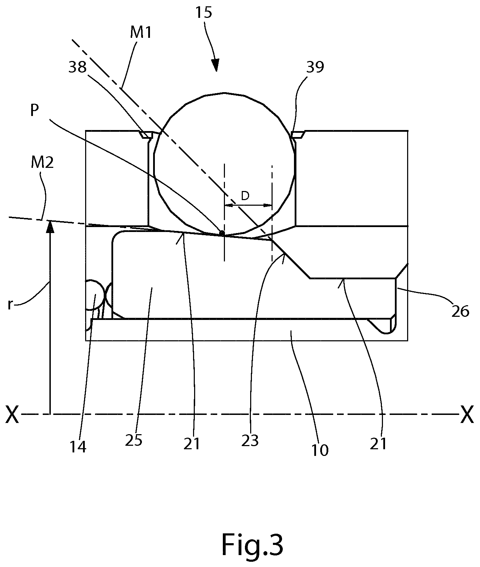

Hierzu ist das mindestens eine Sperrelement 15 als Rastkugel ausgebildet und in einer Ausnehmung 38 der Gehäusehülse 33 bzw. des zweiten Gehäuseabschnitts 32 gehalten und in der Ausnehmung 38 im Wesentlichen senkrecht zu der Längsachse X-X beweglich gelagert gehalten. Die Ausnehmung 38 kann zylinderförmig senkrecht zu der Längsachse X-X ausgebildet sein und mit der Form des mindestens einen Sperrelement 15 derart korrespondieren, dass das Sperrelement 15 leichtgängig senkrecht zu der Längsachse X-X beweglich in der Ausnehmung 38 gelagert gehalten ist. Insbesondere auf der vergrößerten Darstellung in Figur 3 ist ersichtlich, dass die Ausnehmung 38 auf der der Verriegelungskulisse 20 abgewandten Seite eine Haltekante 39 aufweist, durch die die Ausnehmung 38 auf der der Rastkulisse 74 zugewandten verjüngt ausgebildet ist. Die Haltekante 39 ist derart eingerichtet, ein Herausfallen aus der Ausnehmung 38 des jeweiligen Sperrelements 15, insbesondere bei der Montage des erfindungsgemäßen Sperraktors 1 bzw. der erfindungsgemäßen Parksperre 2 zu verhindern. Das mindestens eine Sperrelement 15 kann in Abhängigkeit von der Position des Zylinders 70 in die erste Aussparung 76 oder in die zweite Aussparung 77 der Rastkulisse 74 eingreifen und dadurch die relative Position des Zylinders 70 zu dem Aktorgehäuse 30 festlegen.

Die Verriegelungskulisse 20 kann fest auf dem Stellelement 10 angeordnet sein und umfasst eine erste Fläche 21, eine Keilfläche 23 und eine zweite Fläche 22.

Der vergrößerten Darstellung in Figur 3 ist zu entnehmen, dass die Keilfläche 23 die erste Fläche 21 mit der zweiten Fläche 22 verbindet und eine Steigung M1 aufweist. Die Durchmesser der ersten Fläche 21 und der zweiten Fläche 22 sind unterschiedlich groß bemessen. Wenn die erste Fläche 21 in Wirkkontakt mit den Sperrelement 15 steht, greift das Sperrelement 15 in die jeweilige Aussparung 76, 77. Wenn dagegen die zweite Fläche 22 in Wirkverbindung mit den Sperrelement 15 steht, kann das Sperrelement 15 die jeweilige Aussparung 76, 77 verlassen und eine Bewegung des Zylinders 70 in der Längsachse X-X ist freigegeben.

Die erste Fläche 21 ist zu der Keilfläche 23 mit einer zweiten Steigung M2 geneigt ausgebildet, wodurch die erste Fläche 21 im Gegensatz zu der zweiten Fläche 22 keine Zylindermantelfläche ist, sondern kegelförmig mit der zweiten Steigung M2 ausgebildet ist.

Die Steigung M1 der Keilfläche 23 ist betragsmäßig stets größer als die zweite Steigung M2 ausgebildet, wobei bevorzugt die erste Steigung M1 mindestens doppelt so groß ist wie die zweite Steigung M2 der ersten Fläche 21. Im dargestellten Ausführungsbeispiel beträgt die zweite Steigung M2 ca. ein Zehntel der Steigung M1, also ca. 10*M2 ≈ M1, wobei die zweite Steigung M2 auch bis zu 1/25*M1 und weniger betragen kann. Die Steigung M1 und die zweite Steigung M2 entsprechen der mathematischen Steigung einer Kurve oder Linie und berechnen sich im dargestellten Ausführungsbeispiel anhand der Änderung des Radius der Keilfläche 23 oder der erste Fläche 21 entlang der Längsachse X-X, also M1 = Δr/Δx bzw. M2 = Δr/Δx. Das mathematische Vorzeichen, also plus (+) oder minus (-), der Steigung M1 und der zweiten Steigung M2 ist gleich. Demnach sind die erste Fläche 21 und die Keilfläche 23 in die gleiche Richtung geneigt.

Die zweite Steigung M2 der ersten Fläche 21 kann bevorzugt derart gewählt werden, dass das Sperrelement 15 und die Verriegelungskulisse 20 in der Position A nicht entgegen der Federkraft der Rückstellfeder 14 verschoben werden können. Bei einer Belastung des Zylinders 70 mit einer Lastaxialkraft, wird durch die zweite Steigung M2 der ersten Fläche 21 die zum Verstellen des Stellelementes 10 benötigte Kraft deutlich reduziert. Folglich kann der elektromagnetische Aktor 5 kleiner dimensioniert werden.

In der Position A liegt das Sperrelement 15 oder liegen die Sperrelemente 15 an einem Kontaktpunkt P auf der ersten Fläche 21 an, wobei der Kontaktpunkt P in einem Abstand D zu der Keilfläche 23 angeordnet ist. Der Abstand D kann 2mm ≥ D ≥ 0,25mm betragen bevorzugt ca. 1mm, wobei der Abstand D auf eine Übergangskante zwischen der Keilfläche 23 und der ersten Fläche 21 bezogen ist.

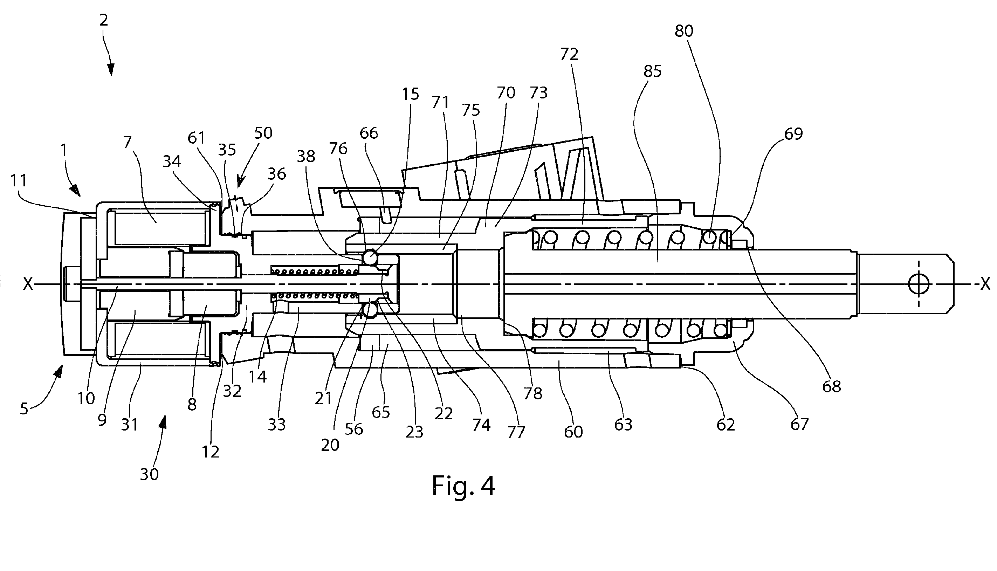

Die Verriegelungskulisse 20 ist als Hülse 25 auf das Stellelement 10 aufgesetzt und mittels der Rückstellfeder 14 gegen einen Flansch 26 des Stellelements 10 gehalten wird . Figur 4 zeigt eine Weiterbildung der Parksperre 2 gemäß den Figuren 1 bis 3. Die in Figur 4 gezeigte Parksperre 2 unterscheidet sich von der zuvor beschrieben Parksperre 2 in der Ausgestaltung der Gleitbuchse 75 bzw. der Rastkulisse 74.

Die Gleitbuchse 75 kann, wie in der dargestellten Weiterbildung gezeigt ist, nur eine erste Aussparung 76 aufweisen, in die das Sperrelement 15 zum Festlegen des Zylinders 70 in der ersten Position - wie zuvor beschrieben wurde - ausgebildet ist. Die zweite Aussparung 76 kann durch einen Endabschnitt der Gleitbuchse 75 und dem Kolben 70 ausgebildet werden, wodurch Materialeinsparungen und eine weitere Gewichtsreduzierung erzielt werden können.

Die Aussparung 76 ist trapezförmig ausgebildet und weist zwei Flächen F1, F2 mit jeweils einem Kontaktbereich C1 und C2 auf. An dem jeweiligen Kontaktbereich C1 und C2 kontaktiert das Sperrelement 15 die Aussparung 76, wenn es in die Rastkulisse 74 eingreift.

Die Aussparung 76 weist eine offene Seite auf der der Längsachse X-X zugewandten Seite auf, deren Länge - parallel zu der Längsachse X-X gemessen - kleiner ist, als die Länge des Sperrelements 15, ebenfalls parallel zu der Längsachse X-X gemessen. Weiterhin ist ersichtlich, dass die zwei Flächen F1 und F2 zueinander derart geneigt angeordnet sind und einen Öffnungswinkel β von ca. 90° einschließen. Die Aussparung 76 verjüngt sich mit zunehmenden Abstand von der Längsachse X-X.

Wenn das Sperrelement 15 in die Aussparung 76 eingreift, sinddie zwei Kontaktbereiche C1 und C2 zu einer Linie L beabstandet angeordnet. Die Linie L steht radial bzw. senkrecht von der Längsachse X-X ab und verläuft durch einen geometrischen Mittelpunkt S des Sperrelements. Die zwei Kontaktbereiche C1 und C2 sind vorliegend in der Längsachse X-X auf gegenüberliegenden Seiten der Linie L angeordnet.

Das Sperrelement 15 kann beliebig ausgebildet sein, jedoch wird eine Rastkugel mit einem im Wesentlichen konstanten Durchmesser bevorzugt. In diesem Fall verläuft eine Linie durch den Mittelpunkt S der Rastkugel und die zwei Kontaktbereiche C1 und C2 sind beidseitig und beabstandet von der Linie angeordnet. Der Abstand in der Längsachse X-X der zwei Kontaktbereiche C1 und C2 ist kleiner als der Durchmesser der Rastkugel und größer als ca. 1/10 des Durchmessers der Rastkugel.

Wenn das Sperrelement 15 die Kontaktbereiche C1, C2, die idealisiert unter Vernachlässigung von Deformationen und der Reibung auch Kontaktpunkte sind, die Aussparung 76 kontaktiert, wirkt eine resultierende Kraft in diesen Kontaktbereichen C1, C2 nicht parallel oder senkrecht zu der Längsachse X-X, sondern bevorzugt in einem Winkel von ca. 45° zu der Längsachse, wodurch die Kraft zum Entriegeln der Verriegelungseinrichtung 1 der Parksperre 2 reduziert wird.

### Bezugszeichenliste

- 1: Sperraktor
- 2: Parksperre
- 5: Aktor
- 7: Spule
- 8: Anker
- 9: Poldeckel
- 10: Stellelement
- 11: erste Seite
- 12: zweite Seite
- 14: Rückstellfeder
- 15: Sperrelement
- 20: Verriegelungskulisse
- 21: erste Fläche
- 22: zweite Fläche
- 23: Keilfläche
- 25: Hülse
- 26: Flansch
- 30: Aktorgehäuse
- 31: erster Gehäuseabschnitt
- 32: zweiter Gehäuseabschnitt
- 33: Gehäusehülse
- 34: Flansch
- 35: Absatz
- 36: Hinterschneidung
- 38: Ausnehmung
- 39: Haltekante
- 50: Verbindungsstelle
- 56: Dichtung
- 60: Zylindergehäuse
- 61: erste Seite
- 62: zweite Seite
- 63: Durchgangsöffnung
- 65: Druckraum
- 66: Steueröffnung
- 67: Deckel
- 68: Durchgangsöffnung
- 69: Federteller
- 70: Zylinder
- 71: erster Abschnitt
- 72: zweiter Abschnitt
- 73: Übergangsbereich
- 74: Rastkulisse
- 75: Gleitbuchse
- 76: erste Aussparung
- 77: zweite Aussparung
- 78: Federschuh
- 80: Druckfeder
- 85: Parksperrenstößel

- C1: Kontaktbereich
- C2: Kontaktbereich
- D: Abstand
- F: Fläche
- L: Linie
- M1: erste Steigung von 23
- M2: Zweite Steigung von 21 und/oder 22
- P: Kontaktpunkt
- S: geometrischer Mittelpunkt von 15
- X-X: Längsachse
- β: Öffnungswinkel

## Patentansprüche

1. Elektromagnetischer Sperraktor (1) einer Parksperre (2), der in einer Längsachse (X-X) angeordnet ist, aufweisend:
- ein bewegliches und betätigbares Stellelement (10), das zum Festlegen eines Zylinders (70) in eine erste Position (A) und zum Freigeben eines Zylinders (70) in eine zweite Position (B) beweglich ist und eine Verriegelungskulisse (20) umfasst, wobei der elektromagnetische Sperraktor (1) eine Anfangslage und eine Endlage aufweist, und die Anfangslage dem unbetätigten, unbestromten Zustand des Sperraktors (1) entspricht und die Endlage einem betätigten, bestromten Zustand des Sperraktors (1) entspricht,
- mindestens ein Sperrelement (15), das relativ zu der Verriegelungskulisse (20) verschiebbar gehalten ist,
- wobei die Verriegelungskulisse (20) eine erste Fläche (21) und eine zweite Fläche (22) aufweist, die durch eine Keilfläche (23) mit einer Steigung (M1) verbunden sind, und
- wobei die erste Fläche (21) in der ersten Position (A) und eine zweite Fläche (22) in der zweiten Position (B) mit dem mindestens einen Sperrelement (15) in Wirkkontakt sind,
wobei wenigstens die erste Fläche (21) zu der Keilfläche (23) mit einer zweiten Steigung (M2) geneigt ist,
wobei die erste Fläche (21) und die Keilfläche (23) in die gleiche Richtung geneigt sind, und
wobei die Steigung (M1) der Keilfläche (23) betragsmäßig größer ist als die zweite Steigung (M2),
wobei eine Rückstellfeder (14) vorgesehen ist,
wobei die Rückstellfeder (14) das Stellelement (10) in einer Aktoranfangslage in der ersten Position (A) vorgespannt hält, und die Verriegelungskulisse (20) das mindestens eine Sperrelement (15),
in der den Zylinder (70) der Parksperre (2) feststellenden Position hält, und
wobei die Verriegelungskulisse (20) als Hülse (25) auf das Stellelement (10) aufgesetzt ist und mittels der Rückstellfeder (14) gegen einen Flansch (26) des Stellelements (10) gehalten wird.

2. Elektromagnetischer Sperraktor (1) nach Anspruch 1, **dadurch gekennzeichnet, dass** die Steigung (M1) der Keilfläche (23) und die zweite Steigung (M2) der wenigstens einen ersten und/oder der zweiten Fläche höchstens 2:1 beträgt.

3. Elektromagnetischer Sperraktor (1) nach einem der Ansprüche 1 oder 2,
**dadurch gekennzeichnet, dass** das Stellelement (10) in der Längsachse (X-X) linearbeweglich ist, oder dass das Stellelement (10) um die Längsachse (X-X) drehbeweglich ist.

4. Elektromagnetischer Sperraktor (1) nach einem der vorgenannten Ansprüche,
**dadurch gekennzeichnet, dass** ein Aktorgehäuse (30) vorgesehen ist, und dass das Stellelement (10) und/oder das mindestens eine Sperrelement (15) in dem Aktorgehäuse gelagert sind, bzw. ist.

5. Elektromagnetischer Sperraktor (1) nach einem der vorgenannten Ansprüche,
**dadurch gekennzeichnet, dass** das mindestens eine Sperrelement (15) eine Rastkugel oder ein Raststift ist.

6. Parksperre (2), insbesondere zur Verwendung in einem Kraftfahrzeug mit Automatikgetriebe, mit einem elektromagnetischen Sperraktor (1) nach einem der Ansprüche 1 bis 5 und einem in der Längsachse (X-X) hubbeweglichen Zylinder (70), wobei der Zylinder (70) eine Rastkulisse (74) umfasst, in die das Sperrelement (15) in der ersten Position (A) oder der zweiten Position (B) eingreifen kann.

7. Parksperre (2) nach Anspruch 6, **dadurch gekennzeichnet, dass**
die Rastkulisse (74) mindestens eine Aussparung (76, 77) aufweist, dass die mindestens eine Aussparung (76, 77) von mindestens einer Fläche (A) gebildet wird, dass die mindestens eine Fläche (F) zwei Kontaktbereiche (C1, C2) aufweist, an denen das Sperrelement (15) in der ersten Position (A) oder der zweiten Position (B) die Aussparung (76, 77) kontaktiert, und dass die zwei Kontaktbereiche (C1, C2) beanstandet zu einer Linie (L) angeordnet sind, die durch einen geometrischen Mittelpunkt (S) des Sperrelements (15) verläuft.

8. Parksperre (2) nach Anspruch 7, **dadurch gekennzeichnet, dass** die zwei Kontaktbereiche (C1, C2) in der Längsachse (X-X) auf gegenüberliegenden Seiten der Linie (L) angeordnet sind.

9. Parksperre (2) nach Anspruch 7 oder 8, **dadurch gekennzeichnet, dass** die mindestens eine Aussparung (76, 77) U-, V- oder trapezförmig ist.

10. Kraftfahrzeug mit Automatikgetriebe, aufweisend mindestens eine Parksperre (2) nach Anspruch 6.

## Claims

1. Electromagnetic lock actuator (1) of a parking lock (2) which is arranged in a longitudinal axis (X-X), comprising:
- a movable and actuatable adjusting element (10) which is movable into a first position (A) for fixing a cylinder (70) and into a second position (B) for releasing a cylinder (70) and comprises a locking link (20), wherein the electromagnetic lock actuator (1) has a starting position and an end position, and the starting position corresponds to the non-actuated, deenergised state of the lock actuator (1) and the end position corresponds to the actuated, energised state of the lock actuator (1),
- at least one lock element (15) which is held so as to be displaceable relative to the locking link (20),
- wherein the locking link (20) comprises a first surface (21) and a second surface (22) which are connected by a wedge surface (23) having a gradient (M1), and
- wherein the first surface (21) in the first position (A) and a second surface (22) in the second position (B) are in operative contact with the at least one lock element (15),
Wherein at least one first surface (21) is inclined relative to the wedge surface (23) with a second gradient (M2),
Wherein the first surface (21) and the wedge surface (23) are inclined in the same direction, and
Wherein the gradient (M1) of the wedge surface (23) is greater, in terms of amount, than the second gradient (M2),
wherein a return spring (14) holds the adjusting element (10) in a manner preloaded in the first position (A) in an actuator starting position, and the locking link (20) holds the at least one lock element (15) in the position fixing the cylinder (70) of the parking lock (2), and wherein the locking link (20) is placed on the adjusting element (10) as a sleeve (25) and is held against a flange (26) of the adjusting element (10) by means of the return spring (14).

2. Electromagnetic lock actuator (1) according to claim 1, **characterised in that** the gradient (M1) of the wedge surface (23) and the second gradient (M2) of the at least one first and/or the second surface is at most 2:1.

3. Electromagnetic lock actuator (1) according to either of claims 1 and 2,
**characterised in that** the adjusting element (10) is linearly movable in the longitudinal axis (X-X), or **in that** the adjusting element (10) is rotatably movable about the longitudinal axis (X-X).

4. Electromagnetic lock actuator (1) according to any of the preceding claims,
**characterised in that** an actuator housing (30) is provided, and **in that** the adjusting element (10) and/or the at least one lock element (15) is or are mounted in the actuator housing.

5. Electromagnetic lock actuator (1) according to any of the preceding claims,
**characterised in that** the at least one lock element (15) is a locking sphere or a locking pin.

6. Parking lock (2), in particular for use in a motor vehicle having an automatic transmission, comprising an electromagnetic lock actuator (1) according to any of claims 1 to 5 and a liftable cylinder (70), wherein the cylinder (70) comprises a latching link (74) into which the lock element (15) can engage in the first position (A) or the second position (B).

7. Parking lock (2) according to claim 6,
**characterised in that** the latching link (74) comprises at least one recess (76, 77), **in that** the at least one recess (76, 77) is formed by at least one surface (A), **in that** the at least one surface (F) comprises two contact regions (C1, C2) at which the lock element (15) contacts the recess (76, 77) in the first position (A) or the second position (B), and **in that** the two contact regions (C1, C2) are arranged spaced apart from a line (L) that extends through a geometric centre point (S) of the lock element (15).

8. Parking lock (2) according to claim 7,
**characterised in that** the two contact regions (C1, C2) are arranged on opposite sides of the line (L) in the longitudinal axis (X-X).

9. Parking lock (2) according to either claim 7 or claim 8, **characterised in that** the at least one recess (76, 77) is U-shaped, V-shaped or trapezoidal.

10. Motor vehicle comprising an automatic transmission, comprising at least one parking lock (2) according to claim 6.

## Revendications

1. Actionneur (1) électromagnétique de verrouillage d'un verrouillage (2) de stationnement, qui est disposé suivant un axe (X-X) longitudinal, comportant :
- un élément (10) de réglage mobile et pouvant être actionné, qui est mobile pour la fixation d'un cylindre (70) dans une première position (A) et pour la libération d'un cylindre (70) dans une deuxième position (B) et qui comprend une coulisse (20) de verrouillage, dans lequel l'actionneur (1) électromagnétique de verrouillage a une position de début et une position de fin et la position de début correspond à l'état non actionné, non alimenté en courant de l'actionneur (1) de verrouillage et la position de fin correspond à un état actionné, alimenté en courant de l'actionneur (1) de verrouillage,
- au moins un élément (15) de blocage, qui est maintenu coulissant par rapport à la coulisse (20) de verrouillage,
- dans lequel la coulisse (20) de verrouillage a une première surface (21) et une deuxième surface (22), qui sont reliées par une surface (23) de coin ayant une pente (M1) et
- dans lequel la première surface (21) dans la première position (A) et une deuxième surface (22) dans la deuxième position (B) sont en contact d'action avec le au moins un élément (15) de blocage,
dans lequel au moins la première surface (21) est inclinée par rapport à la surface (23) de coin d'une deuxième pente (M2),
dans lequel la première surface (21) et la surface (23) de coin sont inclinées dans la même direction, et
dans lequel la pente (M1) de la surface (23) de coin est plus grande en valeur absolue que la deuxième pente (M2), dans lequel il est prévu un ressort (14) de rappel,
dans lequel le ressort (14) de rappel maintient précontraint l'élément (10) de réglage dans une position de début d'actionneur dans la première position (A) et la coulisse (20) de verrouillage maintient le au moins élément (15) de blocage dans la position fixant le cylindre (70) du verrouillage (2) de stationnement,
et dans lequel la coulisse (20) de verrouillage est mise sous la forme d'un manchon (25) sur l'élément (10) de réglage et est maintenue, au moyen du ressort (14) de rappel, sur une bride (26) de l'élément (10) de réglage.

2. Actionneur (1) électromagnétique de verrouillage suivant la revendication 1,
**caractérisé en ce que** le rapport de la pente (M1) de la surface (23) de coin à la deuxième pente (M2) de la au moins une première et/ou la deuxième surface est au plus de 2:1.

3. Actionneur (1) électromagnétique de verrouillage suivant l'une des revendications 1 ou 2,
**caractérisé en ce que** l'élément (10) de réglage est mobile linéairement dans l'axe (X-X) longitudinal ou **en ce que** l'élément (10) de réglage est mobile en rotation autour de l'axe (X-X) longitudinal.

4. Actionneur (1) électromagnétique de verrouillage suivant l'une des revendications précédentes,
**caractérisé en ce qu'**il est prévu un carter (30) d'actionneur et **en ce que** l'élément (10) de réglage et/ou le au moins élément (15) de blocage est/sont montés dans le carter d'actionneur.

5. Actionneur (1) électromagnétique de verrouillage suivant l'une des revendications précédentes,
**caractérisé en ce que** le au moins un élément (15) de blocage est une bille d'encliquetage ou une tige d'encliquetage.

6. Verrouillage (2) de stationnement, à utiliser en particulier dans un véhicule automobile à transmission automatique, comprenant un actionneur (1) électromagnétique de verrouillage suivant l'une des revendications 1 à 5 et un cylindre (70) mobile dans sa course suivant l'axe (X-X) longitudinal, dans lequel le cylindre (70) comprend une coulisse (74) d'encliquetage, dans laquelle l'élément (15) de blocage peut pénétrer dans la première position (A) ou dans la deuxième position (B).

7. Verrouillage (2) de stationnement suivant la revendication 6,
**caractérisé en ce que** la coulisse (74) d'encliquetage a au moins un évidement (76, 77), **en ce que** le au moins un évidement (76, 77) est formé par au moins une surface (A), **en ce que** la au moins une surface (F) a deux parties (C1, C2) de contact, auxquelles l'élément (15) de blocage est en contact dans la première position (A) ou dans la deuxième position (B) avec l'évidement (76, 77) et **en ce que** les deux parties (C1, C2) de contact sont disposées à distance d'une ligne (L), qui passe par un centre (S) géométrique de l'élément (15) de blocage.

8. Verrouillage (2) de stationnement suivant la revendication 7,
**caractérisé en ce que** les deux parties (C1, C2) de contact sont disposées sur des côtés opposés de la ligne (L) suivant l'axe (X-X) longitudinal.

9. Verrouillage (2) de stationnement suivant la revendication 7 ou 8,
**caractérisé en ce qu'**au moins un évidement (76, 77) est en forme de U, de V ou trapézoïdal.

10. Véhicule automobile à transmission automatique comportant au moins un verrouillage (2) de stationnement suivant la revendication 6.
